# EUROPÄISCHE PATENTSCHRIFT

(11) **EP 4 118 500 B1**
(45) Veröffentlichungstag und Bekanntmachung des Hinweises auf die Patenterteilung: **01.01.2025**
(21) Anmeldenummer: 21708219.7
(22) Anmeldetag: 25.02.2021
(51) Int. Cl.: G05B 19/418

(54) **VERFAHREN ZUM BETREIBEN EINER TECHNISCHEN ANLAGE UND TECHNISCHE ANLAGE**
METHOD FOR OPERATING A TECHNICAL INSTALLATION, AND TECHNICAL INSTALLATION
PROCÉDÉ DE COMMANDE D'UNE INSTALLATION TECHNIQUE, ET INSTALLATION TECHNIQUE

(30) Priorität: 13.03.2020 DE 102020001681
(43) Veröffentlichungstag der Anmeldung: 18.01.2023
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHÖNUNG, Frank, 76676 Graben-Neudorf (DE); WEIS, Patrick, 75045 Wössingen (DE); ANGST, Michael, 76187 Karlsruhe (DE); FUCHS, Alexander, 76646 Bruchsal (DE); WALZ, Tanja, 75045 Walzbachtal (DE)
(86) Internationale Anmeldenummer: PCT/EP2021/054752
(87) Internationale Veröffentlichungsnummer: WO 2021/180486

(56) Entgegenhaltungen:
- WO-A1-2013/119942
- CN-A- 110 264 120
- DE-A1- 102017 120 381
- SUGIURA H ET AL: "Real-time collision avoidance with whole body motion control for humanoid robots", INTELLIGENT ROBOTS AND SYSTEMS, 2007. IROS 2007. IEEE/RSJ INTERNATIONAL CONFERENCE ON, IEEE, PISCATAWAY, NJ, USA, 29 October 2007 (2007-10-29), pages 2053 - 2058, XP031222061, ISBN: 978-1-4244-0911-2
- JAIN A. K. ET AL: "Production scheduling/rescheduling in flexible manufacturing", INTERNATIONAL JOURNAL OF PRODUCTION RESEARCH., vol. 35, no. 1, 1 January 1997 (1997-01-01), GB, pages 281 - 309, XP055806192, ISSN: 0020-7543, DOI: 10.1080/002075497196082

## Beschreibung

Die Erfindung betrifft ein Verfahren zum Betreiben einer technischen Anlage, wobei ein Auftrag zur Herstellung eines Produkts einem ersten mobilen Assistenzsystem übermittelt wird, und Bauteile, welche zur Herstellung des Produkts erforderlich sind, von dem ersten mobilen Assistenzsystem aufgenommen werden. Die Erfindung betrifft auch eine technische Anlage zur Herstellung eines Produkts, die zur Ausführung des erfindungsgemäßen Verfahrens eingerichtet ist.

Ein Verfahren zum Betreiben einer Fertigungsanlage und eine Fertigungsanlage sind aus der DE 10 2017 002 964 A1 bekannt. Die Fertigungsanlage weist eine übergeordnete Steuerung, Arbeitsstationen und Fahrzeuge auf. Die übergeordnete Steuerung übermittelt den Fahrzeugen einen jeweiligen Auftrag, welcher die Reihenfolge der zu erreichenden Arbeitsstationen umfasst.

Die DE 10 2017 002 963 A1 offenbart eine Fertigungsanlage und ein Verfahren zum Betreiben einer Fertigungsanlage zur Herstellung eines Produktes. Die Fertigungsanlage umfasst ein Fahrzeug, auf welchem ein Roboterarm angeordnet ist. Der Roboterarm weist mehrere Antriebe auf, die mit einer Steuerung verbunden sind. Das Fahrzeug mit dem Roboterarm fungiert dabei als Assistent bei der Montage eines Produkts.

Aus der DE 10 2015 014 714 A1 ist ein System mit mehreren Ladungsträgern und verschiedenen Verkehrsträgern bekannt. Die Ladungsträger weisen dabei jeweils einen Antrieb sowie eine Steuerung auf und sind in der Lage, selbsttätig die verschiedenen Verkehrsträger zu wechseln.

Das Dokument DE 10 2018 110 074 A1 offenbart ein Verfahren zum Zuordnen einer mobilen Ortungseinheit zu einem digitalen Bearbeitungsplan für eine industrielle Bearbeitung von einem Werkstückverbund.

Das Dokument EP 3 367 315 A1 offenbart ein Produktionssystem mit einer Werkzeugmaschine zum Bearbeiten von Werkstücken und mit Fluggeräten. Die Fluggeräte dienen unter anderem zum Transport von Werkstücken.

Aus der WO 2013/119942 A1 ist ein Auftragsverwaltungssystem für eine Flotte von autonomen mobilen Robotern bekannt. Das Auftragsverwaltungssystem verarbeitet Aufträge in automatisierten Umgebungen.

Das Dokument "Production scheduling-rescheduling in flexible manufacturing" beschreibt Verfahren zur Planung von Produktionsaufträgen.

Aus dem Dokument CN 110264120 A ist ein Verfahren zur Planung von Routen für autonome Fahrzeuge in Lagerhäusern bekannt.

Das Dokument DE 10 2017 120381 A1 offenbart ein Verfahren für eine Zuordnung eines zu bearbeitenden Werkstücks zu einer Mobileinheit eines Innenraum-Ortungssystems, mit dem Schritt des Bereitstellens eines Fertigungssteuerungssystems für die industrielle Bearbeitung von Werkstücken mit einer Werkzeugmaschine gemäß werkstückspezifischen Bearbeitungsplänen.

Das Dokument SUGIURA H ET AL: "Real-time collision avoidance with whole body motion control for humanoid robots",INTELLIGENT ROBOTS AND SYSTEMS, 2007. IROS 2007. IEEE/RSJ INTERNATIONAL CONFERENCE ON, IEEE, PISCATAWAY, NJ, USA, 29. Oktober 2007 (2007-10-29), Seiten 2053-2058,ISBN: 978-1-4244-0911-2 offenbart eine Realzeitkollisionsvermeidung mit Ganzkörperbewegung eines humanoiden Roboters mit Halsgelenken.

Der Erfindung liegt die Aufgabe zugrunde, ein Verfahren zum Betreiben einer technischen Anlage sowie eine technische Anlage zur Herstellung eines Produkts zu verbessern.

Die Aufgabe wird durch ein Verfahren zum Betreiben einer technischen Anlage mit den im Anspruch 1 angegebenen Merkmalen gelöst. Vorteilhafte Ausgestaltungen und Weiterbildungen sind Gegenstand der Unteransprüche. Die Aufgabe wird auch durch eine technische Anlage zur Herstellung eines Produkts mit den in Anspruch 3 angegebenen Merkmalen gelöst. Vorteilhafte Ausgestaltungen und Weiterbildungen sind Gegenstand der Unteransprüche.

Bei einen erfindungsgemäßen Verfahren zum Betreiben einer technischen Anlage wird ein Auftrag zur Herstellung eines Produkts einem ersten mobilen Assistenzsystem übermittelt, und Bauteile, welche zur Herstellung des Produkts erforderlich sind, werden von dem ersten mobilen Assistenzsystem aufgenommen. Ferner wird eine Arbeitsstation ermittelt, an welcher ein Arbeitsschritt zur Herstellung des Produkts auf dem ersten mobilen Assistenzsystem durchführbar ist. Wenn der dem ersten mobilen Assistenzsystem übermittelte Auftrag als Eilauftrag klassifiziert ist, so wird eine Information über den Eilauftrag an die ermittelte Arbeitsstation übermittelt, und es wird eine Information über den Eilauftrag an mindestens ein zweites mobiles Assistenzsystem, welches vor der ermittelten Arbeitsstation auf eine Durchführung eines Arbeitsschritts wartet, übermittelt. Ferner wird das erste mobile Assistenzsystem zu der ermittelten Arbeitsstation bewegt, und der Arbeitsschritt zur Herstellung des Produkts wird auf dem ersten mobilen Assistenzsystem an der ermittelten Arbeitsstation durchgeführt. Nachdem an der Arbeitsstation der Arbeitsschritt zur Herstellung des Produkts auf dem ersten mobilen Assistenzsystem durchgeführt ist, wird das vor der ermittelten Arbeitsstation wartende zweite mobile Assistenzsystem zu der ermittelten Arbeitsstation bewegt.

Erfindungsgemäß weist jedes der mobilen Assistenzsysteme eine Arbeitsfläche auf, auf welcher der Arbeitsschritt zur Herstellung des Produkts an der Arbeitsstation durchführbar ist, wobei das Produkt vollständig auf dem mobilen Assistenzsystem herstellbar ist, und wobei jedes der mobilen Assistenzsysteme eine graphische Anzeigeeinheit aufweist, auf welcher eine Montageanleitung zur Herstellung des Produkts darstellbar ist, und wobei jedes der mobilen Assistenzsysteme eine Antriebsvorrichtung aufweist, mittels welcher die graphische Anzeigeeinheit rotatorisch und translatorisch beweglich ist, und wobei die Antriebsvorrichtung dazu eingerichtet ist, die graphische Anzeigeeinheit in Abhängigkeit von einer Fahrgeschwindigkeit des mobilen Assistenzsystems in eine definierte Stellung zu bewegen.

Anschließend wird der Arbeitsschritt zur Herstellung des Produkts auf dem zweiten mobilen Assistenzsystem an der ermittelten Arbeitsstation durchgeführt. Das erste mobile Assistenzsystem wird, sofern noch weitere Arbeitsschritte durchzuführen sind, zu einer weiteren Arbeitsstation bewegt.

Durch das erfindungsgemäße Verfahren ist die Flexibilität der Arbeitsabläufe zur Herstellung von Produkten in einer technischen Anlage vorteilhaft erhöht. Das erfindungsgemäße Verfahren gestattet, Aufträge, die als Eilaufträge klassifiziert sind, bevorzugt abzuarbeiten. Aufträge müssen also nicht zwingend nach einer zuvor festgelegten Reihenfolge abgearbeitet werden. Im Produktionsablauf ist eine zuvor festgelegte Reihenfolge änderbar, indem mobile Assistenzsysteme mit Eilaufträgen an einer Arbeitsstation bevorzugt behandelt werden im Vergleich zu mobilen Assistenzsystemen mit Standardaufträgen.

Vorzugsweise wird, wenn der dem ersten mobilen Assistenzsystem übermittelte Auftrag als Standardauftrag klassifiziert ist, eine Information über den Standardauftrag an die ermittelte Arbeitsstation übermittelt. Ferner wird das zweite mobile Assistenzsystem, welches vor der ermittelten Arbeitsstation auf die Durchführung des Arbeitsschritts wartet, zu der ermittelten Arbeitsstation bewegt, und der Arbeitsschritt zur Herstellung des Produkts wird auf dem zweiten mobilen Assistenzsystem an der ermittelten Arbeitsstation durchgeführt. Nachdem an der Arbeitsstation der Arbeitsschritt zur Herstellung des Produkts auf dem zweiten mobilen Assistenzsystem durchgeführt ist, wird das erste mobile Assistenzsystem zu der ermittelten Arbeitsstation bewegt.

Anschließend wird der Arbeitsschritt zur Herstellung des Produkts auf dem ersten mobilen Assistenzsystem an der ermittelten Arbeitsstation durchgeführt. Das zweite mobile Assistenzsystem wird, sofern noch weitere Arbeitsschritte durchzuführen sind, zu einer weiteren Arbeitsstation bewegt.

Das Verfahren gestattet somit, Aufträge, die als Standardaufträge klassifiziert sind, in einer zuvor festgelegten Reihenfolge abzuarbeiten. Durch Abarbeiten der Standardaufträge in der zuvor festgelegten Reihenfolge ist die Planbarkeit des Produktionsablaufs in der technischen Anlage verbessert.

Eine erfindungsgemäße technische Anlage zur Herstellung eines Produkts ist zur Ausführung des erfindungsgemäßen Verfahrens eingerichtet und umfasst mindestens ein erstes mobiles Assistenzsystem und ein zweites mobiles Assistenzsystem. Das erste mobile Assistenzsystem sowie das zweite mobile Assistenzsystem sind jeweils als autonom fahrende Fahrzeuge ausgebildet, welche jeweils eine Antriebseinrichtung, einen elektrischen Energiespeicher zur Versorgung der Antriebseinrichtung sowie eine Steuereinheit zur Steuerung der Antriebseinrichtung aufweisen. Dabei ist das Produkt vollständig auf dem mobilen Assistenzsystem herstellbar.

Durch die erfindungsgemäße Ausgestaltung der technischen Anlage ist die Flexibilität der Arbeitsabläufe zur Herstellung von Produkten vorteilhaft erhöht. In der erfindungsgemäßen technischen Anlage sind Aufträge, die als Eilaufträge klassifiziert sind, bevorzugt abarbeitbar. Aufträge müssen also nicht zwingend nach einer zuvor festgelegten Reihenfolge abgearbeitet werden. Im Produktionsablauf ist eine zuvor festgelegte Reihenfolge änderbar, indem mobile Assistenzsysteme mit Eilaufträgen an einer Arbeitsstation bevorzugt behandelt werden im Vergleich zu mobilen Assistenzsystemen mit Standardaufträgen.

Erfindungsgemäß weist jedes der mobilen Assistenzsysteme eine graphische Anzeigeeinheit auf, auf welcher eine Montageanleitung zur Herstellung des Produkts darstellbar ist. Eine solche Montageanleitung unterstützt vorteilhaft einen Werker, der den Arbeitsschritt durchführt. Der Werker hat insbesondere die Möglichkeit, eine stets aktuelle Montageanleitung zur Herstellung des Produkts abzurufen.

Erfindungsgemäß weist jedes der mobilen Assistenzsysteme eine Antriebsvorrichtung auf, mittels welcher die graphische Anzeigeeinheit rotatorisch und translatorisch beweglich ist. Die Antriebseinheit ermöglicht, die graphische Anzeigeeinheit für einen Werker optimal sichtbar zu positionieren, beispielsweise abhängig von einer Körpergröße des Werkers.

Erfindungsgemäß ist die Antriebsvorrichtung dazu eingerichtet, die graphische Anzeigeeinheit in Abhängigkeit von einer Fahrgeschwindigkeit des mobilen Assistenzsystems in eine definierte Stellung zu bewegen.

Gemäß einer vorteilhaften Ausgestaltung der Erfindung weist jedes der mobilen Assistenzsysteme einen Digitalrechner und einen digitalen Datenspeicher auf, wobei in dem digitalen Datenspeicher mindestens ein Auftrag zur Herstellung eines Produkts ablegbar ist. Ein in dem digitalen Datenspeicher abgelegter Auftrag ist dabei als Eilauftrag sowie als Standardauftrag klassifizierbar. Der Digitalrechner des Transportsystems stellt dabei eine entsprechende Rechenleistung bereit und beinhaltet insbesondere Software um den mindestens einen Auftrag zu verwalten.

Gemäß einer bevorzugten Ausgestaltung der Erfindung weist jedes der mobilen Assistenzsysteme Kommunikationsmittel zur drahtlosen Kommunikation mit der ermittelten Arbeitsstation sowie mit anderen mobilen Assistenzsystemen auf. Die Kommunikationsmittel dienen vorzugsweise auch zur drahtlosen Kommunikation mit einem Server der technischen Anlage.

Besonders vorteilhaft weist jedes der mobilen Assistenzsysteme mindestens eine steuerbare Lichtquelle und mindestens einen lichtsensitiven Sensor als Kommunikationsmittel zur drahtlosen Kommunikation auf. Vorteilhaft ist eine Beleuchtungsanlage des mobilen Assistenzsystems als steuerbare Lichtquelle verwendbar. Eine Kommunikation zwischen einer Lichtquelle und einem lichtsensitiven Sensor erzeugt keine störende elektromagnetische Strahlung und ist nicht störanfällig.

Gemäß einer vorteilhaften Weiterbildung der Erfindung weist jedes der mobilen Assistenzsysteme einen Sensor zur Ermittlung einer Entfernung zu einem Objekt und Mittel zur Erfassung einer Position des mobilen Assistenzsystems innerhalb der technischen Anlage auf.

Somit ist das mobile Assistenzsystem insbesondere in der Lage, einen Fahrweg zu der ermittelten Arbeitsstation zu bestimmen.

Gemäß einer vorteilhaften Ausgestaltung der Erfindung weist jedes der mobilen Assistenzsysteme einen Montageassistenten auf, welcher insbesondere in Form eines Roboterarms ausgebildet ist. Mittels eines derartig ausgebildeten Montageassistenten ist die Durchführung des Arbeitsschritts an der ermittelten Arbeitsstation erleichtert.

Gemäß einer vorteilhaften Weiterbildung der Erfindung weist jedes der mobilen Assistenzsysteme ein Werkzeug zur Durchführung des Arbeitsschritts an der ermittelten Arbeitsstation auf. Bei dem Werkzeug handelt es sich beispielsweise um einen Elektroschrauber zum Festdrehen von Schrauben sowie Muttern mit einem vorgegebenen Drehmoment. Ein derartig ausgebildetes Werkzeug erleichtert die Durchführung des Arbeitsschritts an der ermittelten Arbeitsstation.

Besonders vorteilhaft ist das Werkzeug elektrisch mit dem elektrischen Energiespeicher des mobilen Assistenzsystems verbunden und von diesem mit elektrischer Energie versorgbar. Eine separate Energiequelle zum Betreiben des Werkzeugs ist somit nicht erforderlich.

Beispielsweise bewegt die Antriebsvorrichtung die graphische Anzeigeeinheit bei einer Bewegung des Fahrzeugs in eine Ruheposition, in welcher die graphische Anzeigeeinheit vor Kollisionen mit anderen Gegenständen geschützt ist, und bei Stillstand des Fahrzeugs bewegt die Antriebsvorrichtung die graphische Anzeigeeinheit in eine Arbeitsposition, in welcher die graphische Anzeigeeinheit ausgefahren ist und die Montageanleitung für den Werker sichtbar ist.

Gemäß einer vorteilhaften Weiterbildung der Erfindung weist jedes der mobilen Assistenzsysteme eine Arbeitsfläche auf, auf welcher der Arbeitsschritt zur Herstellung des Produkts an der Arbeitsstation durchführbar ist, wobei eine Arbeitshöhe der Arbeitsfläche über einem Boden, insbesondere mittels eines Scherengestells, einstellbar ist. Die Arbeitshöhe der Arbeitsfläche ist damit vorteilhaft beispielsweise an eine Körpergröße des Werkers, der den Arbeitsschritt durchführt, anpassbar.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
Figur 1: eine schematische Darstellung einer technischen Anlage und
Figur 2: eine schematische Darstellung eines mobilen Assistenzsystems.

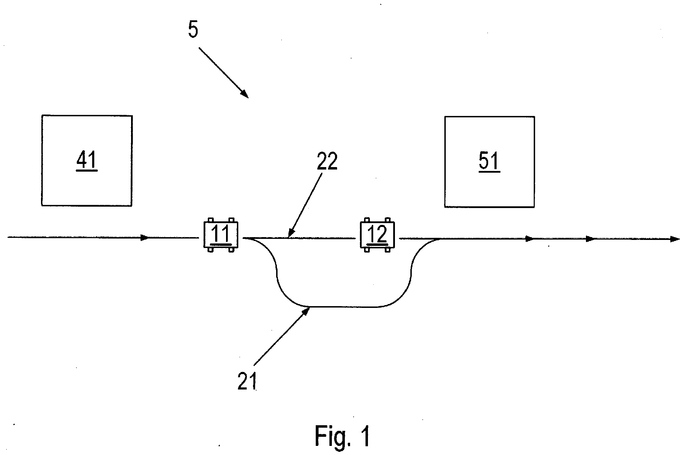

Figur 1 zeigt eine schematische Darstellung einer technischen Anlage 5. Bei der technischen Anlage 5 handelt es sich vorliegend um eine industrielle Anwendung, beispielsweise ein Produktionswerk. Die technische Anlage 5 dient zur Herstellung von Produkten, beispielsweise zur Herstellung von Getrieben für Elektromotoren.

Die technische Anlage 5 umfasst mehrere Lagerplätze 41, wobei hier nur ein Lagerplatz 41 dargestellt ist. An dem Lagerplatz 41 sind verschiedene Bauteile verfügbar, welche zur Herstellung eines Produkts erforderlich sind. Bei den besagten Bauteilen handelt es sich beispielsweise um Getriebegehäuse, Zahnräder, Wellen oder Schrauben.

Die technische Anlage 5 umfasst mehrere Arbeitsstationen 51 wobei hier nur eine Arbeitsstation 51 dargestellt ist. An der Arbeitsstation 51 ist ein Arbeitsschritt durchführbar, welcher zur Herstellung eines Produkts erforderlich ist. Bei dem besagten Arbeitsschritt handelt es sich beispielsweise um das Schneiden von Gewinden in Getriebegehäuse oder um das Einsetzen von Zahnrädern sowie Wellen in ein Getriebegehäuse oder um das Festdrehen von Schrauben sowie Muttern.

Die technische Anlage 5 umfasst auch mehrere mobile Assistenzsysteme 11, 12. Vorliegend sind ein erstes mobiles Assistenzsystem 11 und ein zweites mobiles Assistenzsystem 12 dargestellt. Bei den mobilen Assistenzsystemen 11, 12 handelt es sich um autonom fahrende Fahrzeuge. Die mobilen Assistenzsysteme 11, 12 werden insbesondere zu den Lagerplätzen 41 sowie zu der Arbeitsstationen 51 bewegt.

Vorliegend wird ein Auftrag 20 zur Herstellung eines Produkts dem ersten mobilen Assistenzsystem 11 übermittelt. Der Auftrag 20 enthält Informationen über Bauteile, welche zur Herstellung des Produkts erforderlich sind, sowie über Arbeitsschritte, welche zur Herstellung des Produkts durchzuführen sind. Der übermittelte Auftrag 20 ist vorliegend als Eilauftrag klassifiziert.

Es wird mindestens ein Lagerplatz 41 ermittelt, an welchem Bauteile, die zur Herstellung des Produkts erforderlich sind, verfügbar sind. Das erste mobile Assistenzsystem 11 wird zu dem ermittelten Lagerplatz 41 bewegt, und Bauteile, welche zur Herstellung des Produkts erforderlich sind, werden an dem ermittelten Lagerplatz 41 von dem ersten mobilen Assistenzsystem 11 aufgenommen.

Es wird auch mindestens eine Arbeitsstation 51 ermittelt, an welcher ein Arbeitsschritt zur Herstellung des Produkts auf dem ersten mobilen Assistenzsystem 11 durchführbar ist. Eine Information über den Eilauftrag wird von dem ersten mobilen Assistenzsystem 11 an die ermittelte Arbeitsstation 51 übermittelt.

Vor der ermittelten Arbeitsstation 51 wartet ein zweites mobiles Assistenzsystem 12 auf eine Durchführung eines Arbeitsschritts. Das zweite mobile Assistenzsystem 12 hat einen Auftrag 20 zur Herstellung eines Produkts, welcher als Standardauftrag klassifiziert ist. Eine Information über den Eilauftrag wird von dem ersten mobilen Assistenzsystem 11 auch an das zweite mobile Assistenzsystem 12 übermittelt.

Das zweite mobile Assistenzsystem 12 wartet daraufhin weiter vor der ermittelten Arbeitsstation 51 auf die Durchführung des Arbeitsschritts, und das erste mobile Assistenzsystem 11 wird auf einem ersten Fahrweg 21 zu der ermittelten Arbeitsstation 51 bewegt. Der erste Fahrweg 21 wird dabei derart gewählt, dass das erste mobile Assistenzsystem 11 von seiner aktuellen Position an dem zweiten mobilen Assistenzsystem 12 vorbei zu der ermittelten Arbeitsstation 51 gelangt.

Anschließend, wenn das erste mobile Assistenzsystem 11 an der ermittelten Arbeitsstation 51 angelangt ist, wird der Arbeitsschritt zur Herstellung des Produkts auf dem ersten mobilen Assistenzsystem 11 an der ermittelten Arbeitsstation 51 durchgeführt. Wenn der Arbeitsschritt zur Herstellung des Produkts durchgeführt ist wird das erste mobile Assistenzsystem 11 von der ermittelten Arbeitsstation 51 weg bewegt. Sofern noch weitere Arbeitsschritte durchzuführen sind, wird eine weitere Arbeitsstation 51 ermittelt, an welcher ein solcher Arbeitsschritt durchführbar ist, und das erste mobile Assistenzsystem 11 wird zu der weiteren Arbeitsstation 51 bewegt.

Nachdem an der Arbeitsstation 51 der Arbeitsschritt zur Herstellung des Produkts auf dem ersten mobilen Assistenzsystem 11 durchgeführt ist, und das erste mobile Assistenzsystem 11 von der ermittelten Arbeitsstation 51 weg bewegt ist, wird das vor der ermittelten Arbeitsstation 51 wartende zweite mobile Assistenzsystem 12 zu der ermittelten Arbeitsstation 51 bewegt. Anschließend wird der Arbeitsschritt zur Herstellung des Produkts auf dem zweiten mobilen Assistenzsystem 12 an der ermittelten Arbeitsstation 51 durchgeführt.

Falls der dem ersten mobilen Assistenzsystem 11 übermittelte Auftrag 20 als Standardauftrag klassifiziert ist, so wird eine Information über den Standardauftrag an die ermittelte Arbeitsstation 51 übermittelt. Das zweite mobile Assistenzsystem 12, welches vor der ermittelten Arbeitsstation 51 auf die Durchführung des Arbeitsschritts wartet, wird dann zuerst zu der ermittelten Arbeitsstation 51 bewegt, und der Arbeitsschritt zur Herstellung des Produkts wird auf dem zweiten mobilen Assistenzsystem 12 an der ermittelten Arbeitsstation 51 durchgeführt. Wenn der Arbeitsschritt zur Herstellung des Produkts durchgeführt ist wird das zweite mobile Assistenzsystem 12 von der ermittelten Arbeitsstation 51 weg bewegt.

Nachdem an der Arbeitsstation 51 der Arbeitsschritt zur Herstellung des Produkts auf dem zweiten mobilen Assistenzsystem 12 durchgeführt ist, und das zweite mobile Assistenzsystem 12 von der ermittelten Arbeitsstation 51 weg bewegt ist, wird das erste mobile Assistenzsystem 11 auf einem zweiten Fahrweg 22 zu der ermittelten Arbeitsstation 51 bewegt. Der zweite Fahrweg 22 wird dabei derart gewählt, dass das erste mobile Assistenzsystem 11 von seiner aktuellen Position schnellstmöglich zu der ermittelten Arbeitsstation 51 gelangt. Anschließend wird der Arbeitsschritt zur Herstellung des Produkts auf dem ersten mobilen Assistenzsystem 11 an der ermittelten Arbeitsstation 51 durchgeführt.

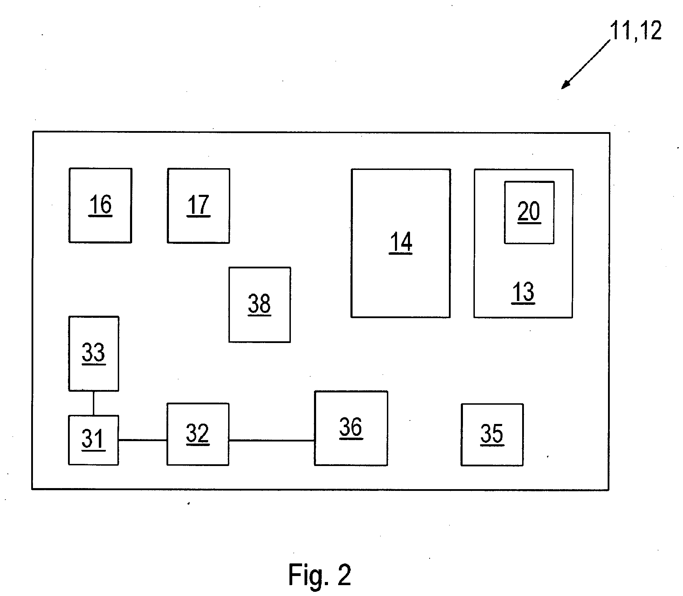

Figur 2 zeigt eine schematische Darstellung eines mobilen Assistenzsystems 11, 12. Das mobile Assistenzsystem 11, 12 ist insbesondere dazu eingerichtet, Bauteile zur Herstellung eines Produkts sowie ein teilweise gefertigtes Produkt oder ein vollständig gefertigtes Produkt zu transportieren. Das Produkt ist somit vollständig auf dem mobilen Assistenzsystem 11, 12 herstellbar. Das mobile Assistenzsystem 11, 12 weist eine Arbeitsfläche auf, auf welcher insbesondere der Arbeitsschritt zur Herstellung des Produkts an der Arbeitsstation 51 durchführbar ist. Dabei ist eine Arbeitshöhe der Arbeitsfläche über einem Boden mittels eines hier nicht dargestellten Scherengestells einstellbar.

Das mobile Assistenzsystem 11, 12 umfasst einen digitalen Datenspeicher 13 zur Ablage von elektronischen Dateien. Der Datenspeicher 13 dient insbesondere zur Ablage von Aufträgen 20. Das mobile Assistenzsystem 11, 12 umfasst einen Digitalrechner 14, welcher auf den Datenspeicher 13, insbesondere auf einen dort abgelegten Auftrag 20, zugreift. Ferner dient der Digitalrechner 14 dazu, einen Fahrweg 21, 22 zu der ermittelten Arbeitsstation 51 zu bestimmen.

Das mobile Assistenzsystem 11, 12 umfasst eine Antriebseinrichtung 31, welche, einen Elektromotor, ein Getriebe und Antriebsräder aufweist. Das mobile Assistenzsystem 11, 12 umfasst ferner einen elektrischen Energiespeicher 32 zur Versorgung der Antriebseinrichtung 31 mit elektrischer Energie. Das mobile Assistenzsystem 11, 12 umfasst auch eine Steuereinheit 33 zur Steuerung der Antriebseinrichtung 31. Die Steuereinheit 31 kommuniziert mit dem Digitalrechner 14.

Das mobile Assistenzsystem 11, 12 umfasst eine steuerbare Lichtquelle 16 und einen lichtsensitiven Sensor 17 als Kommunikationsmittel. Die besagten Kommunikationsmittel dienen insbesondere zur drahtlosen Kommunikation mit der ermittelten Arbeitsstation 51 sowie mit anderen mobilen Assistenzsystemen 11, 12. Ferner umfasst das mobile Assistenzsystem 11, 12 einen hier nicht dargestellten Sensor zur Ermittlung einer Entfernung zu einem Objekt und hier nicht dargestellte Mittel zur Erfassung einer Position des mobilen Assistenzsystems 11, 12 innerhalb der technischen Anlage 5.

Das mobile Assistenzsystem 11, 12 umfasst auch ein Werkzeug 36. Bei dem Werkzeug 36 handelt es sich vorliegend um einen Elektroschrauber zum Festdrehen von Schrauben sowie Muttern mit einem vorgegebenen Drehmoment. Das Werkzeug 36 dient insbesondere zur Durchführung des Arbeitsschritts an der Arbeitsstation 51. Das Werkzeug 36 ist elektrisch mit dem elektrischen Energiespeicher 32 des mobilen Assistenzsystems 11, 12 verbunden. Der elektrische Energiespeicher 32 versorgt das Werkzeug 36 mit elektrischer Energie.

Das mobile Assistenzsystem 11, 12 umfasst einen Montageassistenten 35. Der Montageassistent 35 ist beispielsweise in Form eines Roboterarms ausgebildet. Zusätzlich umfasst das mobile Assistenzsystem 11, 12 eine graphische Anzeigeeinheit 38. Auf der graphischen Anzeigeeinheit 38 ist eine Montageanleitung zur Herstellung des Produkts darstellbar.

### Bezugszeichenliste

- 5: Technische Anlage
- 11: erstes mobiles Assistenzsystem
- 12: zweites mobiles Assistenzsystem
- 13: Datenspeicher
- 14: Digitalrechner
- 16: Lichtquelle
- 17: lichtsensitiver Sensor
- 20: Auftrag
- 21: erster Fahrweg
- 22: zweiter Fahrweg
- 31: Antriebseinrichtung
- 32: Energiespeicher
- 33: Steuereinheit
- 35: Montageassistent
- 36: Werkzeug
- 38: Anzeigeeinheit
- 41: Lagerplatz
- 51: Arbeitsstation

## Patentansprüche

1. Verfahren zum Betreiben einer technischen Anlage (5), wobei
ein Auftrag (20) zur Herstellung eines Produkts einem ersten mobilen Assistenzsystem (11) übermittelt wird, und
Bauteile, welche zur Herstellung des Produkts erforderlich sind, von dem ersten mobilen Assistenzsystem (11) aufgenommen werden,
wobei
dass eine Arbeitsstation (51) ermittelt wird, an welcher ein Arbeitsschritt zur Herstellung des Produkts auf dem ersten mobilen Assistenzsystem (11) durchführbar ist, und
wenn der dem ersten mobilen Assistenzsystem (11) übermittelte Auftrag (20) als Eilauftrag klassifiziert ist,
eine Information über den Eilauftrag an die ermittelte Arbeitsstation (51) übermittelt wird,
eine Information über den Eilauftrag an mindestens ein zweites mobiles Assistenzsystem (12),
welches vor der ermittelten Arbeitsstation (51) auf eine Durchführung eines Arbeitsschritts wartet, übermittelt wird,
das erste mobile Assistenzsystem (11) zu der ermittelten Arbeitsstation (51) bewegt wird,
der Arbeitsschritt zur Herstellung des Produkts auf dem ersten mobilen Assistenzsystem (11) an der ermittelten Arbeitsstation (51) durchgeführt wird, und
nachdem an der Arbeitsstation (51) der Arbeitsschritt zur Herstellung des Produkts auf dem ersten mobilen Assistenzsystem (11) durchgeführt ist,
das vor der ermittelten Arbeitsstation (51) wartende zweite mobile Assistenzsystem (12) zu der ermittelten Arbeitsstation (51) bewegt wird, wobei
jedes der mobilen Assistenzsysteme (11, 12) eine Arbeitsfläche aufweist, auf welcher der Arbeitsschritt zur Herstellung des Produkts an der Arbeitsstation (51) durchführbar ist, wobei
das Produkt vollständig auf dem mobilen Assistenzsystem (11, 12) herstellbar ist, und wobei
jedes der mobilen Assistenzsysteme (11, 12)
eine graphische Anzeigeeinheit (38) aufweist, auf welcher eine Montageanleitung zur Herstellung des Produkts darstellbar ist, und wobei
jedes der mobilen Assistenzsysteme (11, 12)
eine Antriebsvorrichtung aufweist, mittels welcher die graphische Anzeigeeinheit (38) rotatorisch und translatorisch beweglich ist, und wobei
die Antriebsvorrichtung dazu eingerichtet ist, die graphische Anzeigeeinheit (38) in Abhängigkeit von einer Fahrgeschwindigkeit des mobilen Assistenzsystems (11, 12) in eine definierte Stellung zu bewegen.

2. Verfahren nach Anspruch 1, **dadurch gekennzeichnet, dass**
wenn der dem ersten mobilen Assistenzsystem (11) übermittelte Auftrag (20) als Standardauftrag klassifiziert ist,
eine Information über den Standardauftrag an die ermittelte Arbeitsstation (51) übermittelt wird, das zweite mobile Assistenzsystem (12), welches vor der ermittelten Arbeitsstation (51) auf die Durchführung des Arbeitsschritts wartet, zu der ermittelten Arbeitsstation (51) bewegt wird,
der Arbeitsschritt zur Herstellung des Produkts auf dem zweiten mobilen Assistenzsystem (12) an der ermittelten Arbeitsstation (51) durchgeführt wird, und
nachdem an der Arbeitsstation (51) der Arbeitsschritt zur Herstellung des Produkts auf dem zweiten mobilen Assistenzsystem (12) durchgeführt ist,
das erste mobile Assistenzsystem (11) zu der ermittelten Arbeitsstation (51) bewegt wird.

3. Technische Anlage (5) zur Herstellung eines Produkts,
eingerichtet zur Ausführung des Verfahrens nach einem der vorstehenden Ansprüche,
umfassend mindestens ein erstes mobiles Assistenzsystem (11) und ein zweites mobiles Assistenzsystem (12), die jeweils als autonom fahrende Fahrzeuge ausgebildet sind, welche jeweils eine Antriebseinrichtung (31), einen elektrischen Energiespeicher (32) zur Versorgung der Antriebseinrichtung (31) sowie eine Steuereinheit (33) zur Steuerung der Antriebseinrichtung (31) aufweisen,
wobei, dass das Produkt vollständig auf dem mobilen Assistenzsystem (11, 12) herstellbar ist, und dass jedes der mobilen Assistenzsysteme (11, 12)
eine graphische Anzeigeeinheit (38) aufweist, auf welcher eine Montageanleitung zur Herstellung des Produkts darstellbar ist, und dass
jedes der mobilen Assistenzsysteme (11, 12)
eine Antriebsvorrichtung aufweist, mittels welcher die graphische Anzeigeeinheit (38) rotatorisch und translatorisch beweglich ist, und dass
die Antriebsvorrichtung dazu eingerichtet ist, die graphische Anzeigeeinheit (38) in Abhängigkeit von einer Fahrgeschwindigkeit des mobilen Assistenzsystems (11, 12) in eine definierte Stellung zu bewegen.

4. Technische Anlage (5) nach Anspruch 3, **dadurch gekennzeichnet, dass** jedes der mobilen Assistenzsysteme (11, 12)
einen Digitalrechner (14) und einen digitalen Datenspeicher (13) aufweist, in welchem mindestens ein Auftrag (20) ablegbar ist.

5. Technische Anlage (5) nach einem der Ansprüche 3 bis 4, **dadurch gekennzeichnet, dass** jedes der mobilen Assistenzsysteme (11, 12)
Kommunikationsmittel zur drahtlosen Kommunikation mit der ermittelten Arbeitsstation (51) sowie mit anderen mobilen Assistenzsystemen (11, 12) aufweist.

6. Technische Anlage (5) nach Anspruch 5, **dadurch gekennzeichnet, dass** jedes der mobilen Assistenzsysteme (11, 12)
mindestens eine steuerbare Lichtquelle (16) und mindestens einen lichtsensitiven Sensor (17) als Kommunikationsmittel zur drahtlosen Kommunikation aufweist.

7. Technische Anlage (5) nach einem der Ansprüche 3 bis 6, **dadurch gekennzeichnet, dass** jedes der mobilen Assistenzsysteme (11, 12)
einen Sensor zur Ermittlung einer Entfernung zu einem Objekt und Mittel zur Erfassung einer Position des mobilen Assistenzsystems (11, 12) innerhalb der technischen Anlage (5) aufweist.

8. Technische Anlage (5) nach einem der Ansprüche 3 bis 7, **dadurch gekennzeichnet, dass** jedes der mobilen Assistenzsysteme (11, 12)
einen Montageassistenten (35) aufweist, welcher insbesondere in Form eines Roboterarms ausgebildet ist.

9. Technische Anlage (5) nach einem der Ansprüche 3 bis 8, **dadurch gekennzeichnet, dass** jedes der mobilen Assistenzsysteme (11, 12)
ein Werkzeug (36) zur Durchführung des Arbeitsschritts an der ermittelten Arbeitsstation (51) aufweist.

10. Technische Anlage (5) nach Anspruch 9, **dadurch gekennzeichnet, dass**
das Werkzeug (36) elektrisch mit dem elektrischen Energiespeicher (32) verbunden und von diesem mit elektrischer Energie versorgbar ist.

11. Technische Anlage (5) nach einem der Ansprüche 3 bis 10, **dadurch gekennzeichnet, dass** jedes der mobilen Assistenzsysteme (11, 12)
eine Arbeitsfläche aufweist, auf welcher der Arbeitsschritt zur Herstellung des Produkts an der Arbeitsstation (51) durchführbar ist, wobei eine Arbeitshöhe der Arbeitsfläche über einem Boden, insbesondere mittels eines Scherengestells, einstellbar ist.

12. Technische Anlage (5) nach einem der Ansprüche 3 bis 11, **dadurch gekennzeichnet, dass** die Antriebsvorrichtung die graphische Anzeigeeinheit (38) bei einer Bewegung des Fahrzeugs in eine Ruheposition bewegt, in welcher die graphische Anzeigeeinheit (38) vor Kollisionen mit anderen Gegenständen geschützt ist, und dass
die Antriebsvorrichtung die graphische Anzeigeeinheit (38) bei Stillstand des Fahrzeugs in eine Arbeitsposition bewegt, in welcher die graphische Anzeigeeinheit ausgefahren ist.

## Claims

1. A method of operating a technical installation (5), wherein an order (20) for manufacturing a product is transmitted to a first mobile assistance system (11) and component parts which are required to manufacture the product are received by the first mobile assistance system (11), wherein there is determined a work station (51) at which a work step for manufacturing the product can be carried out on the first mobile assistance system (11), and when the order (20) transmitted to the first mobile assistance system (11) is classified as a rush order, information about the rush order is transmitted to the determined work station (51), information about the rush order is transmitted to at least one second mobile assistance system (12) which is waiting in front of the determined work station (51) for the carrying out of a work step, the first mobile assistance system (11) is moved to the determined work station (51), the work step for manufacturing the product is carried out on the first mobile assistance system (11) at the determined work station (51), and after the work step for manufacturing the product has been carried out on the first mobile assistance system (11) at the work station (51), the second mobile assistance system (12), waiting in front of the determined work station (51), is moved to the determined work station (51), wherein each of the mobile assistance systems (11, 12) has a work surface on which the work step for manufacturing the product can be carried out at the work station (51), wherein the product can be entirely manufactured on the mobile assistance system (11, 12), and wherein each of the mobile assistance systems (11, 12) has a graphic display unit (38) on which there can be shown an assembly instruction for manufacture of the product, and wherein each of the mobile assistance systems (11, 12) has a drive device by means of which the graphic display unit (38) can be moved in a rotary and translational manner, and wherein the drive device is configured to move the graphic display unit (38) into a defined position, dependent on a travel speed of the mobile assistance system (11, 12).

2. A method according to claim 1, **characterised in that** when the order (20) transmitted to the first mobile assistance system (11) is classified as a standard order, information about the standard order is transmitted to the determined work station (51), the second mobile assistance system (12), waiting in front of the determined work station (51) for the carrying out of the work step, is moved to the determined work station (51), the work step for manufacturing the product is carried out on the second mobile assistance system (12) at the determined work station (51), and after the work step for manufacturing the product has been carried out on the second mobile assistance system (12) at the work station (51), the first mobile assistance system (11) is moved to the determined work station (51).

3. A technical installation (5) for manufacturing a product, configured to carry out the method according to any one of the preceding claims, comprising at least one first mobile assistance system (11) and a second mobile assistance system (12) which are in each case in the form of autonomously driving vehicles which in each case have a drive device (31), an electrical energy store (32) to supply the drive device (31) and a control unit (33) to control the drive device (31), wherein the product can be entirely manufactured on the mobile assistance system (11, 12), and in that each of the mobile assistance systems (11, 12) has a graphic display unit (38) on which there can be shown an assembly instruction for manufacture of the product, and in that each of the mobile assistance systems (11, 12) has a drive device by means of which the graphic display unit (38) can be moved in a rotary and translational manner, and in that the drive device is configured to move the graphic display unit (38) into a defined position, dependent on a travel speed of the mobile assistance system (11, 12).

4. A technical installation (5) according to claim 3, **characterised in that** each of the mobile assistance systems (11, 12) has a digital computer (14) and a digital data store (13) in which at least one order (20) can be stored.

5. A technical installation (5) according to any one of claims 3 to 4, **characterised in that** each of the mobile assistance systems (11, 12) has communication means for wireless communication with the determined work station (51) as well as with other mobile assistance systems (11, 12).

6. A technical installation (5) according to claim 5, **characterised in that** each of the mobile assistance systems (11, 12) has at least one controllable light source (16) and at least one light-sensitive sensor (17) as a communication means for wireless communication.

7. A technical installation (5) according to any one of claims 3 to 6, **characterised in that** each of the mobile assistance systems (11, 12) has a sensor for determining a distance from an object and means for detecting a position of the mobile assistance system (11, 12) within the technical installation (5).

8. A technical installation (5) according to any one of claims 3 to 7, **characterised in that** each of the mobile assistance systems (11, 12) has an assembly assistant (35), in particular in the form of a robotic arm.

9. A technical installation (5) according to any one of claims 3 to 8, **characterised in that** each of the mobile assistance systems (11, 12) has a tool (36) for carrying out the work step at the determined work station (51).

10. A technical installation (5) according to claim 9, **characterised in that** the tool (36) is connected electrically to the electrical energy store (32) and can be supplied with electrical energy by the latter.

11. A technical installation (5) according to any one of claims 3 to 10, **characterised in that** each of the mobile assistance systems (11, 12) has a work surface on which the work step for manufacturing the product can be carried out at the work station (51), wherein a working height of the work surface above the ground is adjustable, in particular by means of a scissor table.

12. A technical installation (5) according to any one of claims 3 to 11, **characterised in that** the drive device moves the graphic display unit (38) into a rest position, in which the graphic display unit (38) is protected from collisions with other objects, upon motion of the vehicle, and **in that** the drive device moves the graphic display unit (38) into a work position, in which the graphic display unit is extended, when the vehicle is stationary.

## Revendications

1. Procédé de fonctionnement d'une installation technique, lors duquel
un ordre (20) de fabrication d'un produit est transmis à un premier système d'assistance mobile (11), et
des composants nécessaires à la fabrication du produit sont réceptionnés par le premier système d'assistance mobile (11),
un poste de travail (51) est déterminé, au niveau duquel une étape de travail permettant de fabriquer le produit peut être mise en oeuvre sur le premier système d'assistance mobile (11), et
lorsque l'ordre (20) transmis au premier système d'assistance mobile (11) est classé comme ordre urgent,
une information sur l'ordre urgent est transmise au poste de travail (51) déterminé,
une information sur l'ordre urgent est transmise à au moins un second système d'assistance mobile (12) qui attend la mise en oeuvre d'une étape de travail en amont du poste de travail (51) déterminé,
le premier système d'assistance mobile (11) est déplacé vers le poste de travail (51) déterminé,
l'étape de travail permettant de fabriquer le produit est mise en oeuvre sur le premier système d'assistance mobile (11) au niveau du poste de travail (51) déterminé, et
après que l'étape de travail permettant de fabriquer le produit sur le premier système d'assistance mobile (11) a été mise en oeuvre au niveau du poste de travail (51),
le second système d'assistance mobile (12) en attente en amont du poste de travail (51) déterminé est déplacé vers le poste de travail (51) déterminé,
chacun des systèmes d'assistance mobiles (11, 12) présentant une surface de travail sur laquelle l'étape de travail permettant de fabriquer le produit peut être mise en oeuvre au niveau du poste de travail (51),
le produit pouvant être entièrement fabriqué sur le système d'assistance mobile (11, 12), et
chacun des systèmes d'assistance mobiles (11, 12) présentant une unité d'affichage graphique (38) sur laquelle peut être montrée une notice de montage permettant de fabriquer le produit, et
chacun des systèmes d'assistance mobiles (11, 12) présentant un dispositif d'entraînement au moyen duquel l'unité d'affichage graphique (38) est mobile en rotation et en translation, et
le dispositif d'entraînement étant conçu pour déplacer l'unité d'affichage graphique (38) jusqu'à une position définie en fonction d'une vitesse de déplacement du système d'assistance mobile (11, 12).

2. Procédé selon la revendication 1, **caractérisé en ce que**
lorsque l'ordre (20) transmis au premier système d'assistance mobile (11) est classé comme ordre standard,
une information sur l'ordre standard est transmise au poste de travail (51) déterminé,
le second système d'assistance mobile (12), qui attend la mise en oeuvre de l'étape de travail en amont du poste de travail (51) déterminé, est déplacé vers le poste de travail (51) déterminé,
l'étape de travail permettant de fabriquer le produit est mise en oeuvre sur le second système d'assistance mobile (12) au niveau du poste de travail (51) déterminé, et
après que l'étape de travail permettant de fabriquer le produit sur le second système d'assistance mobile (12) a été mise en oeuvre au niveau du poste de travail (51),
le premier système d'assistance mobile (11) est déplacé vers le poste de travail (51) déterminé.

3. Installation technique (5) permettant de fabriquer un produit,
conçue pour la mise en oeuvre du procédé selon l'une quelconque des revendications précédentes, comprenant
au moins un premier système d'assistance mobile (11) et un second système d'assistance mobile (12), qui sont respectivement réalisés sous la forme de véhicules à conduite autonome présentant respectivement un dispositif d'entraînement (31), un accumulateur d'énergie électrique (32) permettant d'alimenter le dispositif d'entraînement (31), et une unité de commande (33) permettant de commander le dispositif d'entraînement (31),
le produit pouvant être entièrement fabriqué sur le système d'assistance mobile (11, 12), et
chacun des systèmes d'assistance mobiles (11, 12) présentant une unité d'affichage graphique (38) sur laquelle peut être montrée une notice de montage permettant de fabriquer le produit peut être affichée, et
chacun des systèmes d'assistance mobiles (11, 12) présentant un dispositif d'entraînement au moyen duquel l'unité d'affichage graphique (38) est mobile en rotation et en translation, et
le dispositif d'entraînement étant conçu pour déplacer l'unité d'affichage graphique (38) jusqu'à une position définie en fonction d'une vitesse de déplacement du système d'assistance mobile (11, 12).

4. Installation technique (5) selon la revendication 3, **caractérisée en ce que**
chacun des systèmes d'assistance mobiles (11, 12) présente un calculateur numérique (14) et une mémoire de données numériques (13) au sein de laquelle peut être placé au moins un ordre (20).

5. Installation technique (5) selon l'une quelconque des revendications 3 à 4, **caractérisée en ce que**
chacun des systèmes d'assistance mobiles (11, 12) présente des moyens de communication permettant de communiquer sans fil avec le poste de travail (51) déterminé et avec d'autres systèmes d'assistance mobiles (11, 12).

6. Installation technique (5) selon la revendication 5, **caractérisée en ce que**
chacun des systèmes d'assistance mobiles (11, 12) présente au moins une source de lumière (16) pouvant être commandée et au moins un capteur photosensible (17) faisant office de moyens de communication permettant de communiquer sans fil.

7. Installation technique (5) selon l'une quelconque des revendications 3 à 6, **caractérisée en ce que**
chacun des systèmes d'assistance mobiles (11, 12) présente un capteur permettant de déterminer un éloignement par rapport à un objet et des moyens permettant de détecter une position du système d'assistance mobile (11, 12) à l'intérieur de l'installation technique (5).

8. Installation technique (5) selon l'une quelconque des revendications 3 à 7, **caractérisée en ce que**
chacun des systèmes d'assistance mobiles (11, 12) présente un assistant de montage (35) réalisé en particulier sous la forme d'un bras de robot.

9. Installation technique (5) selon l'une quelconque des revendications 3 à 8, **caractérisée en ce que**
chacun des systèmes d'assistance mobiles (11, 12) présente un outil (36) permettant de mettre en oeuvre l'étape de travail au niveau du poste de travail (51) déterminé.

10. Installation technique (5) selon la revendication 9, **caractérisée en ce que**
l'outil (36) est connecté électriquement à l'accumulateur d'énergie électrique (32) et peut être alimenté en énergie électrique par ledit accumulateur d'énergie électrique.

11. Installation technique (5) selon l'une quelconque des revendications 3 à 10, **caractérisée en ce que**
chacun des systèmes d'assistance mobiles (11, 12) présente une surface de travail sur laquelle l'étape de travail permettant de fabriquer le produit peut être mise en oeuvre au niveau du poste de travail (51), une hauteur de travail de la surface de travail au-dessus du sol pouvant être réglée, en particulier au moyen d'une table élévatrice à ciseaux.

12. Installation technique (5) selon l'une quelconque des revendications 3 à 11, **caractérisée en ce que**, lors d'un déplacement du véhicule, le dispositif d'entraînement déplace l'unité d'affichage graphique (38) jusqu'à une position de repos dans laquelle l'unité d'affichage graphique (38) est protégée contre les collisions avec d'autres objets, et **en ce que**
lorsque le véhicule est à l'arrêt, le dispositif d'entraînement déplace l'unité d'affichage graphique (38) jusqu'à une position de travail dans laquelle l'unité d'affichage graphique est sortie.
